# EUROPEAN PATENT SPECIFICATION

(11) **EP 3 339 683 B1**
(45) Date of publication and mention of the grant of the patent: **13.04.2022**
(21) Application number: 16206401.8
(22) Date of filing: 22.12.2016
(51) Int. Cl.: F16H 25/20, F16F 13/02

(54) **LINEAR ACTUATOR WITH DAMPING MEANS**
LINEARAKTUATOR MIT DÄMPFUNGSVORRICHTUNG
ACTIONNEUR LINEAIRE AVEC DISPOSITIF AMORTISSEUR

(43) Date of publication of application: 27.06.2018
(73) Proprietor: Goodrich Actuation Systems Limited, Solihull, West Midlands B90 4SS (GB)
(72) Inventor: Hawksworth, Andrew, Moreton, Shropshire TF10 9DS (GB); Morgan, Antony, Penn, Wolverhampton WV4 4LF (GB)
(74) Representative: Dehns

(56) References cited:
- US-A- 3 536 314
- US-A1- 2002 074 866
- US-A1- 2010 319 472

## Description

### TECHNICAL FIELD

The present invention relates to linear actuators, most preferably electric or mechanical actuators, but also hydraulic actuators.

### BACKGROUND

Actuators find a very wide range of uses in a wide range of technical fields, for moving or controlling components. As an example, actuators find many applications in the aircraft or aerospace industry. Actuators are used, for example, to move or control operation of control surfaces of an aircraft e.g. to actuate nose wheel steering, elevators, rudders, ailerons etc. Typically, an actuator extends and retracts to allow deployment and retraction of the control system.

A typical actuator comprises an axially moveable member, within a chamber e.g. a cylinder, that is controlled to extend/retract to correspondingly drive the control surface. Actuators are designed to be as light and compact as possible without compromising reliability and safety. Fail-safe features may also be incorporated particularly for 'flight-critical' actuators. It is also important to minimise the maintenance requirements for actuators, especially in aircraft, as repair or maintenance is not possible during flight.

Conventional actuators are hydraulically powered. Movement of the axially moveable member or piston is caused by hydraulic fluid introduced into the chamber or cylinder. Valves are provided to control the fluid flow for appropriate control of the actuator. In some systems, the axially moveable member may comprise two pistons, one inside the other, to increase actuator force whilst maintaining a compact design. Such actuators are described, e.g., in US 2002/074866.

More recently, mechanical and electrical actuators have been developed. In the aircraft industry, for example, there is a move towards developing so-called 'more electric aircraft' (MEA) whereby components such as hydraulic actuators are being supplemented or replaced by electric actuators. These electric actuators overcome some known disadvantages of hydraulic actuators such as their bulk, the need for seals and grommets, the risk of leaks, the high maintenance requirements, the use of potentially explosive oil in an aircraft etc. but they also present their own challenges.

Large forces and speeds can be generated in actuation systems, and high inertial masses can be created. This can create problems at the ends of the actuator stroke, where the moveable member can impact the end of the cylinder with a high inertial mass/force. This can cause undesirable jarring and also undesirable wear or even damage to the actuation system. It is known, therefore, in hydraulic actuators, to provide some form of damping at the ends of the stroke, e.g. in the form of end stops, cushioning or fluid compression and snubbing techniques to absorb the impact or inertial mass.

Providing damping for electric or mechanical actuators, though, presents a challenge as such systems do not allow for the simple use of hydraulic damping e.g. using hydraulic snubbing techniques. Also, because electric actuators use a smaller motor at high speed, to keep the size of the system down, the resulting inertial mass tends to be a magnitude higher than in hydraulic actuator systems, so more effective damping is required. It is possible to electrically slow the system down as it approaches end of stroke; however, this is complex and unreliable as it requires the system to always know, accurately, e.g. by means of a feedback loop, exactly where the axially moveable member is in its stroke and how fast it is moving to be able to slow down to avoid the impact at the end of stroke.

There is, therefore, a need for improved damping of linear actuators, especially electric actuators, but also other forms of actuator including hydraulic actuators.

### SUMMARY

Accordingly, there is provided a linear actuator as defined by claim 1.

The drive means may be e.g. mechanical, electrical or hydraulic.

The axially moveable member may be provided as a first axially moveable member mounted and axially moveable relative to a second axially moveable member. Preferably, a spring is mounted at each end of the axially moveable member and if the axially moveable member comprises a first axially moveable member mounted and axially moveable relative to a second axially moveable member, then at the ends of each of the first and second axially moveable member.

The springs are in the form of friction springs such as those available under the mark "Ringfeder" friction springs, also known as 'Feder rings'.

### BRIEF DESCRIPTION OF THE DRAWINGS

Figure 1 is a cross-sectional view of an actuator according to the invention.
Figure 2 is a detail view of a damping arrangement of the invention with the actuator in a stowed/stowing position.

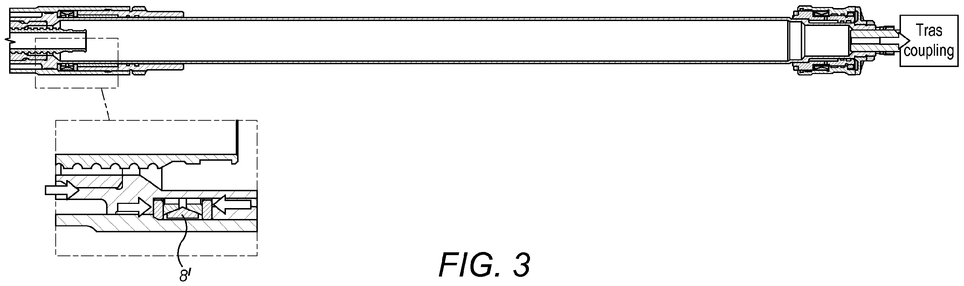

Figure 3 is a detail view of a damping arrangement of the invention with the actuator in a deploy/deploying position.
Figure 4 is a simplified view of an example spring.
Figure 5 shows how the spring force of a spring such as in Figure 4 varies on application of a load.

### DETAILED DESCRIPTION

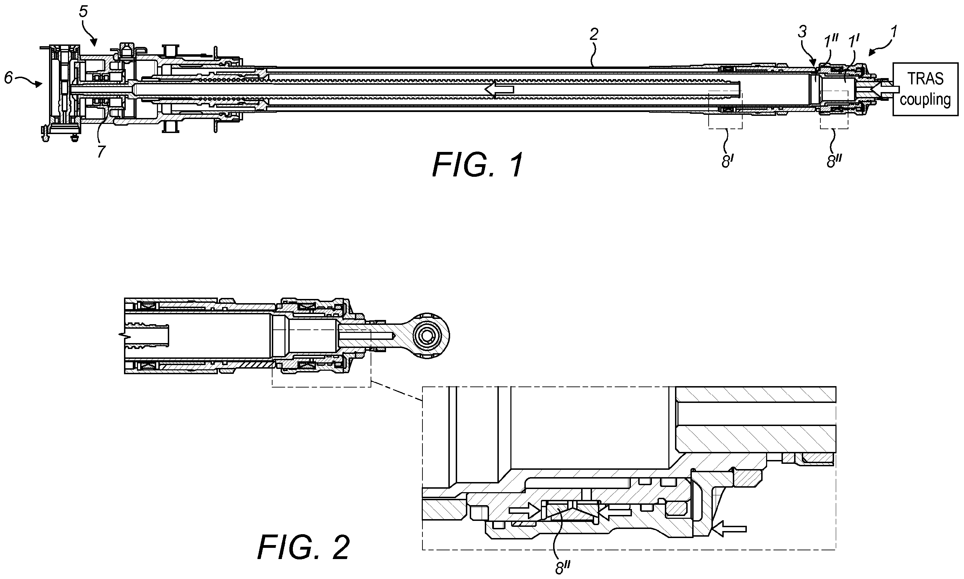

Referring first to Figure 1, an electric actuator is shown comprising an axially moveable member 1 mounted within a cylinder 2. The axially moveable member is arranged to move axially or linearly with respect to the cylinder to extend from and retract into the open end 3 of the cylinder 2. The end of the axially moveable member at the open end of the cylinder is coupled to or arranged to be coupled to the component or surface to be moved, by connecting means e.g. an eye-bolt. In the example shown, the axially moveable member 1 comprises two rods, one 1' inside the other 1". A single rod could also be used.

Movement of the axially moveable member 1 is controlled by an electric motor input 5 controlled by a motor controller. The motor and motor controller can be of any known type and is mounted upstream of input 5. For a hydraulic actuator, the motor and motor controller would be replaced by any known hydraulic supply and control arrangement to cause movement of the axially moveable member by hydraulic fluid pressure. Gearing, such as ball screw gearing 7 may be provided to translate rotary motion of the rotor 5 to linear motion of the axially moveable member 1. Here, a right angle gear box 7a rotates screw 7 providing gearing to nut 7b transferring torque to linear motion of the axially moveable member 1.

The axially moveable member 1 moves between a deploy position and a stow position. These positions will vary depending on the application. As an example, such actuators may be used in a RAT or TRAS system of an aircraft, wherein, as shown, the retracted position of the axially moveable member is the deploy position and the extended position is the stow position. In other applications, the stow and deploy positions may be the retracted and extended positions respectively. In these respective positions, a stop or end surface prevents further axial movement in that direction.

As mentioned above, a high inertial mass can be created by the movement of the member, which can cause the member to crash against the stop with high impact. This can cause damage and/or wear to the assembly components.

To avoid or mitigate such impact, the actuator of the present invention incorporates one or more friction springs 8', 8" axially positioned with respect to the axially moveable member and positioned between the axially moveable member and the respective stops or ends to absorb the impact.

Preferably, a friction spring is provided at each of the deploy (8') and stow (8") positions, but advantages are obtained even with a spring at only one of those locations.

In the example shown, where the axially moveable member comprises an inner and an outer rod, it is also possible to provide four such springs at the two extremes of movement of each rod.

Friction springs are chosen as a large amount of energy is generated by the friction caused by movement of the axially moveable member. The friction springs act to absorb a large amount of energy within a small volume.

The friction springs are fully sealed within the actuator to ensure consistent lubrication and good protection against external foreign bodies. Further, the incorporation of springs into existing actuators e.g. TRAS, is simple and the springs can be tuned to meet the required energy absorption.

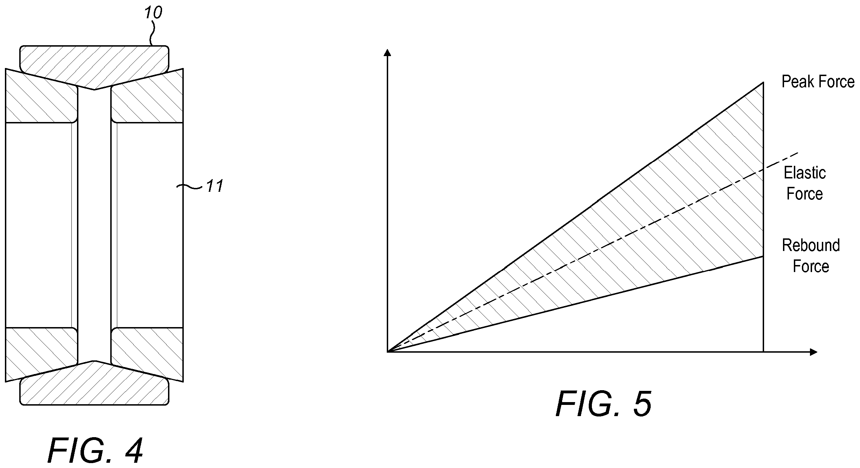

The system uses friction springs such as Ringfeder^{™} friction springs (also known as 'Feder rings'^{™}). As shown in Figure 4, such a spring consists of a series of separate inner 11 and outer 10 rings with mating taper faces. Under the application of an axial load, the wedge action of the taper faces expands the outer rings and contracts the inner rings radially allowing axial deflection.

Friction and hoop stresses between the rings allows the axial force to be elevated to the peak force and the subsequent rebound force is also lower, as shown in Figure 5, thus the ringfeders are both springs and dampers.

The friction springs absorb drive motor kinetic energy to ensure excessive torque being experienced by internal gears of the system.

Such springs could also be incorporated in hydraulic actuators to supplement or replace existing damping.

## Claims

1. A linear actuator comprising:
an axially moveable member (1);
a cylindrical housing (2) within which the axially moveable member is mounted for linear movement relative to the housing; a stop within the housing (2) to limit axial movement of the moveable member;
drive means (5,7) to move the axially moveable member between an extended axial position and a retracted axial position; and **characterized by** one or more friction springs (8) provided at the stop to absorb impact from axial movement of the axially moveable member at the limit of the axial movement of the moveable member at the extended axial position and/or at the retracted axial position, the one or more friction springs (8) being fully sealed within the housing (2)

2. The actuator of claim 1 wherein the drive means is one of mechanical, electrical or hydraulic.

3. The actuator of claim 1 or 2, wherein the axially moveable member is provided as a first axially moveable rod (1') mounted and axially moveable relative to a second axially moveable rod (1").

4. The actuator of any preceding claim wherein the one or more springs comprises a spring mounted at each end of the axially moveable member.

5. The actuator of claim 3 wherein the one or more springs comprises a spring at each end of each of the first and second axially moveable member.

6. The actuator of any preceding claim wherein the friction springs each comprise a series of separate inner (11) and outer (10) rings with mating taper faces, whereby under the application of an axial load, the wedge action of the taper faces expands the outer rings and contracts the inner rings radially allowing axial deflection.

## Patentansprüche

1. Linearaktuator, umfassend:
ein axial bewegliches Element (1);
ein zylindrisches Gehäuse (2), innerhalb dessen das axial bewegliche Element zur linearen Bewegung relativ zum Gehäuse montiert ist; einen Anschlag innerhalb des Gehäuses (2), um die axiale Bewegung des beweglichen Elements zu begrenzen;
eine Antriebseinrichtung (5, 7), um das axial bewegliche Element zwischen einer ausgefahrenen axialen Position und einer eingefahrenen axialen Position zu bewegen; und **gekennzeichnet durch** eine oder mehrere Reibungsfedern (8), die an dem Anschlag bereitgestellt sind, um den Stoß von der axialen Bewegung des axial beweglichen Elements an der Begrenzung der axialen Bewegung des beweglichen Elements an der ausgefahrenen axialen Position und/oder an der eingefahrenen axialen Position aufzunehmen, wobei die eine oder die mehreren Reibungsfedern (8) vollständig innerhalb des Gehäuses (2) abgedichtet sind.

2. Aktuator nach Anspruch 1, wobei die Antriebseinrichtung eines aus mechanisch, elektrisch oder hydraulisch ist.

3. Aktuator nach Anspruch 1 oder 2, wobei das axial bewegliche Element als eine erste axial bewegliche Stange (1') bereitgestellt ist, die an einer zweiten axial beweglichen Stange (1") montiert und relativ zu dieser axial beweglich ist.

4. Aktuator nach einem der vorstehenden Ansprüche, wobei die eine oder die mehreren Federn eine Feder umfassen, die an jedem Ende des axial beweglichen Elements montiert ist.

5. Aktuator nach Anspruch 3, wobei die eine oder die mehreren Federn eine Feder an jedem Ende jedes aus dem ersten und dem zweiten axial beweglichen Element umfassen.

6. Aktuator nach einem der vorstehenden Ansprüche, wobei die Reibungsfedern jeweils eine Reihe von getrennten inneren (11) und äußeren (10) Ringen mit zusammenpassenden Schrägflächen umfassen, wodurch bei Aufbringung einer axialen Last die Keilwirkung der Schrägflächen die äußeren Ringe erweitert und die inneren Ringe radial zusammenzieht, was eine axiale Ablenkung ermöglicht.

## Revendications

1. Actionneur linéaire comprenant :
un élément mobile axialement (1) ;
un carter cylindrique (2) dans lequel l'élément mobile axial est monté pour un mouvement linéaire par rapport au carter ; une butée dans le carter (2) pour limiter le mouvement axial de l'élément mobile ;
un moyen d'entraînement (5,7) pour déplacer l'élément mobile axial entre une position axiale étendue et une position axiale rétractée ; et **caractérisé par** un ou plusieurs ressorts de friction (8) fournis à la butée pour absorber l'impact du mouvement axial de l'élément mobile axial à la limite du mouvement axial de l'élément mobile à la position axiale étendue et/ou à la position axiale rétractée, les un ou plusieurs ressorts de friction (8) étant complètement étanches à l'intérieur du carter (2).

2. Actionneur selon la revendication 1, dans lequel le moyen d'entraînement est l'un d'un mécanisme mécanique, d'un mécanisme électrique ou d'un mécanisme hydraulique.

3. Actionneur de la revendication 1 ou 2, dans lequel l'élément axialement mobile est fourni comme une première tige mobile axialement (1') montée et mobile axialement par rapport à une seconde tige mobile axialement (1").

4. Actionneur selon une quelconque revendication précédente, dans lequel un ou plusieurs ressorts comprend un ressort monté à chaque extrémité de l'élément mobile axialement.

5. Actionneur selon la revendication 3, dans lequel un ou plusieurs ressorts comprend un ressort à chaque extrémité de chacun des premier et second éléments mobiles axialement.

6. Actionneur selon une quelconque revendication précédente, dans lequel les ressorts de friction comprennent chacun une série de bagues intérieures (11) et extérieures (10) séparées avec des faces coniques d'accouplement, moyennant quoi, sous l'application d'une charge axiale, l'action en coin des faces coniques étend les bagues extérieures et contracte les bagues intérieures radialement, ce qui permet une déflexion axiale.
